# EUROPÄISCHE PATENTSCHRIFT

(11) **EP 0 934 589 B1**
(45) Veröffentlichungstag und Bekanntmachung des Hinweises auf die Patenterteilung: **29.03.2000**
(21) Anmeldenummer: 97948787.3
(22) Anmeldetag: 23.10.1997
(51) Int. Cl.: G11B 23/00, G11B 17/02, B25J 15/00

(54) **VERFAHREN UND VORRICHTUNG ZUM GREIFEN VON GEGENSTÄNDEN MIT EINER DURCHGANGSÖFFNUNG**
PROCESS AND DEVICE FOR GRIPPING OBJECTS HAVING A THROUGH HOLE
PROCEDE ET DISPOSITIF DE SAISIE D'OBJETS POURVUS D'UN ORIFICE DEBOUCHANT

(30) Priorität: 24.10.1996 DE 19644158
(43) Veröffentlichungstag der Anmeldung: 11.08.1999
(73) Patentinhaber: GRUNDIG Aktiengesellschaft, 90762 Fürth (DE)
(72) Erfinder: LANGETHAL, Olaf, D-07589 Münchenbernsdorf (DE); FESTA, Manfred, D-04626 Schmölln (DE); LUHDE, Rainer, D-07749 Jena (DE); SCHULZ, Ralph-Michael, D-07549 Gera (DE); RIEBOLD, Dietmar, D-07546 Gera (DE)
(74) Vertreter: Pröll, Jürgen, Dipl.-Ing. (FH)
(86) Internationale Anmeldenummer: EP9705859
(87) Internationale Veröffentlichungsnummer: WO9818126

(56) Entgegenhaltungen:
- EP-A- 0 159 100
- EP-A- 0 428 382
- EP-A- 0 594 128
- WO-A-90/00798
- WO-A-91/14264
- WO-A-93/09538
- WO-A-96/07498
- WO-A-96/23594
- FR-A- 2 686 327
- US-A- 5 247 408
- US-A- 5 275 424
- "RADIAL DISK CLAMP" IBM TECHNICAL DISCLOSURE BULLETIN, Bd. 32, Nr. 11, 1.April 1990, NEW YORK US, Seite 20/21 XP000097587

## Beschreibung

Die Erfindung betrifft ein Verfahren und eine Vorrichtung zum Greifen von Gegenständen mit einer Durchgangsöffnung, insbesondere für Compact-Disk-Datenträger.

Greifer der oben genannten Art sind bereits in Verbindung mit Compact-Disk-Recordern, insbesondere Compact-Disk-Wechslern, bekannt.

Aus dem Artikel: "Universal gripper for hardfile discs", erschienen in: **IBM** Technical Disclosure Bulletin, Vol. 31, No. 4, Sept. 1988, S. 210-213 ist eine Greifvorrichtung für scheibenförmige Objekte mit einer Durchgangsöffnung bekannt. Diese Greifvorrichtung weist neben einem Aufnahmestift einen Rahmen auf, in dem eine "Disk" mit Hilfe des Aufnahmefingers angeordnet werden kann. Die Disk wird aber immer nur in Verbindung mit dem als Halterung dienenden Rahmen bewegt und verlagert. Die Greifvorrichtung vollzieht dazu eine kraftschlüssige Verbindung mit der Außenkontur des Rahmens.

Aus der US 4 123 066 ist eine Vorrichtung zum Wenden von Schallplatten bekannt. Diese Greifvorrichtung umfaßt ebenfalls die Schallplatte am Umfang, um diese zu wenden.

Aus der DE 42 44 698 ist eine Greifvorrichtung für scheibenförmige Objekte mit einer Durchgangsöffnung bekannt. Diese Vorrichtung besteht aus mindestens einem Manipulator zur Verwendung in einer Vorrichtung zum Magazinieren und Transportieren. Der Manipulator weist mindestens eine stiftartige Klemmvorrichtung auf, die in die Durchgangsöffnung des scheibenförmigen Objektes eingreift und im aktivierten Zustand eine Klemmwirkung auf den Randbereich der Durchgangsöffnung ausübt.

Aus der WO95/11518 ist ein Greifer für scheibenförmige Gegenstände mit wenigstens annähernd kreisrundem Außenumfang bekannt. Der Greifer weist Greifklauen auf, die relativ zum Grundkörper verstellbar sind. Mit den Greifklauen werden die scheibenförmigen Gegenstände am Umfang aufgenommen.

Aus WO 96/23594 ist ein Greifer für Compact-Disks bekannt, welcher eine Compact-Disk an der zentralen Öffnung der Compact-Disk aufnimmt. Der Greifer ist an einem Greifarm angeordnet, mittels welchem die aufgenommenen Compact-Disk von einem Ablageort verbracht werden kann. Die Compact-Disk wird bei der Aufnahme durch den Greifer über Elemente (Feder, Konus, Kugel) mittels Federkraft gegen den Friktionsring gedrückt. Hierbei kann die Compact-Disk, durch diese kraftschlüssige Aufnahme, beschädigt werden, was zu Datenverlust führen kann.

Alle oben genannten Vorrichtungen haben den Nachteil, daß der zu greifende Gegenstand bzw. das zu greifende Objekt kraftschlüssig aufgenommen wird. Hierdurch wird auf den Gegenstand eine Kraft ausgeübt, die unter Umständen zu einer Beschädigung des zu greifenden Gegenstandes führen kann. Besonders nachteilig ist dies beim Greifen von Compact-Disks, da sich durch die einwirkende Kraft des Greifers, Haarrisse bilden können, die unter Umständen zu Datenverlust oder gar zur Zerstörung der Compact-Disk führen können.

Aufgabe der Erfindung ist es, ein Verfahren und eine Vorrichtung zu entwickeln, die universell einsetzbar ist und mit dem zu greifenden Gegenstand eine formschlüssige Verbindung eingeht, wodurch eine Beschädigung des zu greifenden Gegenstandes vermieden wird.

Diese Aufgabe wird durch die Merkmale des Anspruches 1 und die Merkmale des Anspruches 4 gelöst.

Vorteilhafte Ausgestaltungen der Erfindung sind in den abhängigen Ansprüchen angegeben.

Das Verfahren beruht auf der erfindungsgemäßen Lösung, einen Gegenstand, der eine Durchgangsöffnung aufweist, formschlüssig zu greifen. Es wird davon ausgegangen, daß sich der zu greifende Gegenstand in einer Lage befindet, in der die Durchgangsöffnung beidseitig unverschlossen und frei zugänglich ist.

Aus US 3,067,861 ist ein sogenannter Innengreifer bekannt. Bei diesem Innengreifer wird ein eiförmiger Kopf in eine gespaltene Führung eingezogen. Beim Einziehen spreizt sich die Führung auf und Gegenstände können auf diese Weise ergriffen werden.

Aus DE 25 29 765 ist eine Kupplung zum Freigeben und Greifen von empfindlichen Werkstücken, insbesondere Vorformlingen aus Kunststoft in Blasformmaschinen bekannt. Die Formlinge werden mittels Fördereinrichtungen zwischen den Arbeitsstationen bewegt. Die Kupplung weist zur Aufnahme eines Werkstücks ein Lagerteil und ein zu diesem axial relativ verschiebliches Trägerteil in konzentrischer Anordnung auf. Außerdem sind eine Anzahl von, durch die Relativbewegung zwischen Lagerteil und Trägerteil betätigbare, Arretierungen vorgesehen, welche die axiale Relativbewegung in eine radiale Bewegung umsetzen, um das Werkstück freizugeben oder zu greifen. Das im wesentlichen becherförmig ausgebildete Trägerteil ist axial beweglich innerhalb des entsprechend becherförmig ausgebildeten Lagerteils gelagert und weist eine Anzahl von Öffnungen auf, in denen je eine der Arretierungen gelagert ist. Das Lagerteil weist im Bereich der Innenseite seiner unteren Seitenwandung eine Nockenfläche auf, welche die Arretierungen radial nach innen bzw. nach außen, in Abhängigkeit von der relativen Axialbewegung zwischen dem becherförmigen Trägerteil und dem becherförmigen Lagerteil zum Greifen bzw. zum Freigeben des Werkstückes, zwingt.

Aus US 3,064,855 ist ein Greifer zum Herausziehen von Brennstäben aus einen Kernkraftreaktor bekannt. Hierbei wird ein Greifkopf am oberen Ende des Brennstabes eingefüht. Der Greifkopf verbreitert im Innern des Brennstabes seine mitgeführten Mittel zum Greifen und ergreift auf diese Weise den Brennstab.

Nachteilig hierbei ist, daß dieser Greifer nicht für den Einsatz tauglich ist, wenn es sich bei dem zu greifenden Gegenstand um einen Gegenstand handelt, dessen Ober- und Unterfläche nicht beschädigt werden darf, insbesondere wenn er vor Verkratzungen geschützt werden muß.

Außerdem ist zunächst sicherzustellen, daß der Greifer aufgrund seiner Formgebung geeignet ist, durch die Durchgangsöffnung hindurch oder um den zu greifenden Gegenstand herum fassen zu können. Vor allem bei Gegenständen mit großen Oberflächen ist ein Umfassen des Gegenstandes nur durch einen Greifer zu ermöglichen, der von seinem Greifumfang größer als der zu greifende Gegenstand ist.

Weist der zu greifende Gegenstand eine Durchgangsöffnung auf, ergibt sich folgende Möglichkeit. Der Greifer kann dann durch die Durchgangsöffnung hindurchgeführt werden und den Gegenstand dadurch greifen, daß man auf der anderen Seite der Durchgangsöffnung den Greifer verbreitert und so eine Auflägefläche für den zu greifenden Gegenstand schafft, deren Außenumfang größer ist als die Durchgangsöffnung. Um ein formschlüssiges Greifen zu ermöglichen muß die Form des Greifers auf die Form der Durchgangsöffnung abgestimmt sein. Besonders vorteilhaft ist es, wenn die Form des Greifers durch die Form der Durchgangsöffnung vorgegeben ist. Im Idealfall stimmt die Form des Greifers mit der Form der Durchgangsöffnung überein, wobei der Greifer in seiner Dimensionierung etwas kleiner als die Durchgangsöffnung gewählt wird. Als Form einer Durchgangsöffnung ist jede geometrische Form denkbar, wie beispielsweise ein Kreis, ein Dreieck, ein Vieleck usw..

Die Merkmale der Ansprüche werden im folgenden an exemplarischen Ausführungsbeispielen anhand der Zeichnungen erläutert. Die Ausführungsbeispiele sind keine erschöpfenden Aufzählungen der erfindungsgemäßen Ausgestaltungsmöglichkeiten, sondern haben nur beispielhaften Charakter.

Es zeigen:
- Fig. 1: einen achsialen Längsschnitt durch einen erfindungsgemäßen Greifer,
- Fig. 2: einen weiteren achsialen Längsschnitt durch einen erfindungsgemäßen Greifer mit abgespreiztem Kugelkranz,
- Fig. 3: einen weiteren achsialen Längsschnitt durch einen erfindungsgemäßen Greifer mit eingezogenem Kugelkranz.

Im folgenden Ausführungsbeispiel wird davon ausgegangen, daß der erfindungsgemäße Greifer in einem System zur Archivierung und wahlweisen Aufnahe und/oder Wiedergabe von Compact-Disks angeordnet ist.

Der Greifer 12 taucht von oben in die Durchgangsöffnung des zu greifenden Gegenstandes ein und so weit durch diese hindurch, bis er auf der gegenüberliegenden Seite aus der Durchgangsöffnung soweit herauskommt, daß er seine Mittel 6 zum Verbreitern des Greifers 12 unterhalb der Durchgangsöffnung ungehindert ausfahren kann. Auf diese Weise werden auf der unteren Seite der Durchgangsöffnung eine oder mehrere Auflageflächen geschaffen. Bewegt man nun den Greifer 12 in entgegengesetzter Richtung, so liegt der zu greifende Gegenstand mit einem Teil seiner Oberfläche auf den Auflageflächen der Mittel 6 zum Verbreitern des Greifers 12 auf und wird zusammen mit dem Greifer 12 bewegt bzw. angehoben. Je genauer die Form und Größe des Greifers 12 auf die Form und Größe der Durchgangsöffnung angepaßt ist, um so besser wird die Auflagefläche für das Greifen des Gegenstandes genutzt.

Als Mittel 6 zum Verbreitern des Greifers 12, ist jede Art von Bolzen, Kugeln, Zylindern, Prismen oder jede andere Form denkbar. Diese Mittel 6 zum Verbreitern des Greifers 12 sind im Greifer 12 integriert und werden bei Bedarf aus dem Innern des Greifers 12 nach außen geschoben.

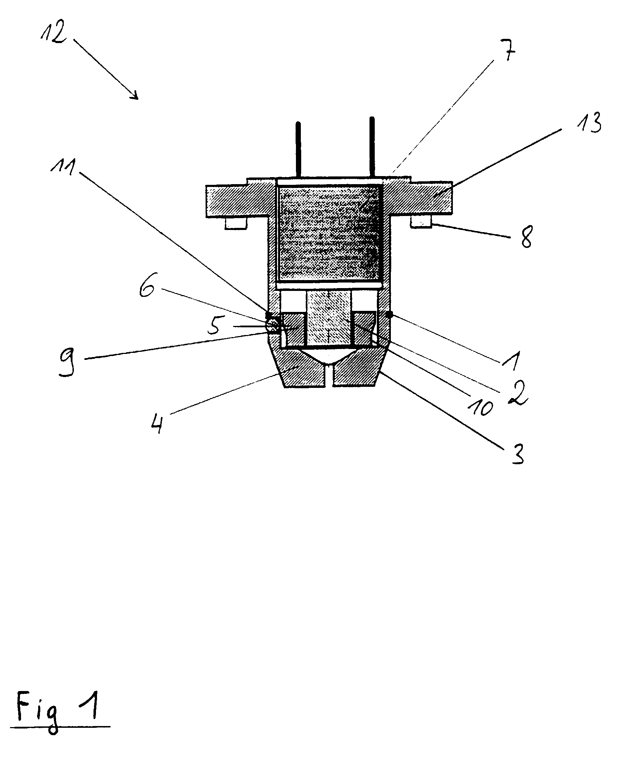

Der erfindungsgemäße, in Fig. 1 gezeigte Greifer 12, besteht aus einem hohlzylindrischen und rotationssymmetrischen Grundkörper 4, dessen Hohlraum sich nach unten hin verjüngt, d.h. in die Form eines Kegels übergeht. Die Außenkontur des Grundkörpers 4 weist an der oberen Seite eine Verbreiterung 13 und an der unteren Seite eine konusartige Form 3 auf.

Diese konusartige Form 3 ist vorzugsweise durch eine Gerade mit einer festgelegten Steigung realisiert. Die Formgebung kann aber in vorteilhafter Weise durch jede andere mathematische Funktion ersetzt werden. Besonders vorteilhaft hat sich eine parabolische Form erwiesen.

Das Material des Grundkörpers 4 besteht aus nicht magnetischem und elektrisch nicht leitenden Material, beispielsweise aus einem Spezialkunststoff. Im Hohlraum des Grundkörpers 4 ist eine Magnetstange 2 und ein Stößel 9 sowie eine Spule 7 angeordnet. Der Stößel 9 weist eine hohlzylindrische Form auf. Im unteren Bereich weist der Stößel 9 eine parabolische Verjüngung 10 auf. Im einfachsten Fall kann die Verjüngung 10 in Form einer Geraden mit einer vordefinierten Steigung realisiert sein.

Der Stößel 9 ist mit einem Ende der Magnetstange 2 verbundenwas vorteilhaft durch eine Verklebung realisiert wird. Das andere Ende der Magnetstange 2 reicht in den Spulenkörper der Spule 7 hinein.

In den Grundkörper 4 sind mindestens drei Bohrungen 5 eingebracht, die jeweils in gleichmäßigem Abstand zueinander angeordnet sind und den gleichen Abstand zum Ende der konusartigen Form 3 haben. Besonders vorteilhaft hat sich erwiesen, sechs Bohrungen 5 in den Grundkörper 4 einzubringen.

In jede dieser Bohrungen 5 ist jeweils eine Stahlkugel 6 angeordnet, die der Größe der Bohrung 5 entspricht und daher beweglich ist. Die Bohrungen 5 sind derart gestaltet, daß sie sich zur äußeren Oberfläche des Grundkörper 4 hin geringfügig verjüngen. Dies hat den Vorteil, daß die Kugeln 6 nicht herausfallen können. Um aber eine einfache Produktion des Greifers 12 zu ermöglichen hat es sich als vorteilhaft erwiesen, die Kugeln 6 anstatt durch eine sich am äußeren Ende verjüngende Bohrung (5), mittels einer Sprengfeder 1, die in einer in den Grundkörper 4 eingebrachten Nut 11 teilweise oberhalb der Bohrungen 5 liegt, zu sichern. Diese Sprengfeder 1 ist derart angeordnet, daß sie einen unteren oder oberen Bereich der Bohrungen 5 teilweise verschließt. Auf diese Weise wird vermieden, daß die Kugeln 6 aus den Bohrungen 5 herausfallen.

Am oberen Rand des Grundkörpers 4 sind Dämpfungspolster 8 angebracht, die verhindern, daß die Oberfläche des zu greifenden Gegenstandes vom Greifer 12 beschädigt wird.

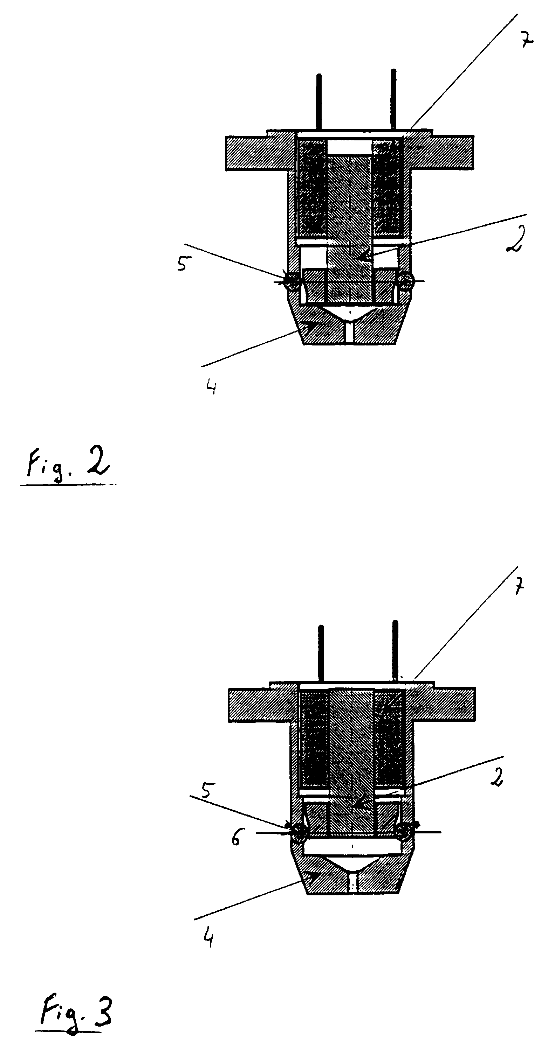

Das Funktionsprinzip des Greifers wird anhand der Figuren 2 und 3 erläutert. Figur 2 zeigt den Greifer, der bevorzugt zum vertikalen Heben von Gegenständen eingesetzt wird, in dem Zustand, in dem die Spule 7 stromlos ist. Ist die Spule 7 stromlos, wird durch die Schwerkraft der Stößel 9 zusammen mit der Magnetstange 2 nach unten, d.h. auf das innere untere Ende des Grundkörpers 4 gedrückt. Die Kugeln 6 werden in diesem Zustand durch die gewählte Form des Stößels 9 in definierter Weise nach außen gedrückt. Durch die Wahl eines magnetischen Ferrits als Material für den Stößel 9 wird im weiteren gewährleistet, daß die Kugeln 6 am Stößel 9 halten und den Greifer 12, auch ohne die Sprengfeder 1 nicht verlassen können. Auf diese Weise entsteht um den Grundkörper 4 ein Kugelkranz, der den Umfang des Grundkörpers 4 an der Stelle der Bohrungen 5 vergrößert.

Figur 3 zeigt den Greifer mit stromdurchflossener Spule 7.
Durchfließt die Spule 7 ein vordefinfierter Strom, bildet sich in der Spule 7 und um diese herum ein Magnetfeld. Durch dieses Magnetfeld wird die Magnetstange 2, die eine zu dem Magnetfeldlinien konträre Polung aufweist, durch das Magnetfeld der Spule 7 entgegen der Schwerkraft angehoben. Der Stößel 9, der mit der Magnetstange 2 verklebt ist, wird ebenfalls nach oben gehoben. Durch die Verjüngung 10 des Stößels 9 werden nun die Kugeln 6, die durch die Materialauswahl des Stößels 9 von diesem angezogen werden und so stets Kontakt mit diesem haben, in das Innere des Grundkörpers 4 gezogen. Der Kugelkranz, der den Umfang des Grundkörpers 4 an der Stelle der Bohrungen 5 vergrößert und die Auflagefläche bildet, wird dadurch eingezogen.

Der Greifer 12 wird zunächst unmittelbar über die Druchgangsöffnung des zu greifenden Gegenstandes geführt. Anschließend wird er in die Durchgangsöffnung des zu greifenden Gegenstandes eingeführt. Um beim Eintauchvorgang des Greifers 12 in die Durchgangsöffnung sicherzustellen, daß der Greifer 12 nicht auf der Oberfläche des zu greifenden Gegenstandes aufsetzt, ist der Grundkörper 4 des Greifers 12 an seinem unteren Ende mit einer konusartigen Form 3 versehen. Hierdurch wird der Greifer 12 oder der zu greifende Gegenstand in die Durchgangsöffnung zentriert. Der Gundkörper 4 muß von seiner Dimensionierung an den zu greifenden Gegenstand derart angepaßt sein, daß zum einen der Grundkörper 4 länger als die Durchgangsöffnung und die Durchgangsöffnung nur wenig breiter als der Grundkörper 4 des Greifers 12 ist, damit beim Anheben des zu greifenden Gegenstandes keine zu großen unsymmetrischen Kräfte auf den Grundkörper 4 ausgeübt werden. Außerdem ist der Umfang des Kugelkranzes, der beim Herausdrücken der Kugeln 6 aus dem Grundkörper 4 entsteht, größer als die Durchgangsöffnung, da andernfalls der zu greifende Gegenstand nicht ergriffen werden kann. Die Auflagefläche und/oder Auflagenpunkte müssen groß genug sein, damit die Flächenpressung am Gegenstand diesen nicht verformt, beschädigt oder zerstört.

Der Greifer 12 taucht in die Durchgangsöffnung ein und durch diese hindurch, bis er mit seinen Dämpfungspolstern 8 die Oberfläche des zu greifenden Gegenstandes berührt. In die Dämpfungspolster 8 bzw. neben diese können Drucksensoren angebracht werden, wodurch vermieden wird, daß eine zu große Kraft auf den zu greifenden Gegenstand einwirkt und dieser beschädigt wird. Die Dämpfungspolster 8 haben die Aufgabe zu verhindern, daß der zu greifende Gegenstand an der Oberfläche beschädigt wird. In besonders vorteilhafter Weise sind diese Dämpfungspolster 8 durch Mosgummiringe realisiert.

Der Greifer 12 taucht durch die Durchgangsöffnung so weit hindurch, bis sich die Kugeln 6 vollständig auf der anderen Seite der Durchgangsöffnung befinden und aus dem Greifer 12 herausgeschoben werden können, ohne die Durchgangsöffnung zu berühren. Hierzu wird durch die Spule 7 ein definierter Stromfluß geschickt, der ein Magnetfeld in der Spule 7 aufbaut, das die Magnetstange 2 zusammen mit dem Stößel 9 in die Richtung bewegt, daß die Kugeln 6 aus dem Grundkörper 4 herausgedrückt werden. Der so entstandene Kugelkranz gewährleistet eine sichere und gleichzeitig schonende formschlüssige Aufnahme des zu greifenden Gegenstandes in bzw. an der Durchgangsöffnung, sobald der Greifer 12 angehoben wird.

Soll der zu greifende Gegenstand wieder freigegeben werden, so wird durch die Spule 7 ein definierter Strom mit umgekehrter Polarität geschickt, das Magnetfeld der Spule 7 ändert seine Polarität und die Magnetstange 2 mit dem Stößel 9 wird in entgegengestzter Richtung bewegt, die Kugeln 6 werden vom Stößel 9 angezogen und in das Innere des Grundkörpers 4 hineingezogen, wodurch der zu greifende Gegenstand freigegeben wird.

Eine vorteilhafte Ausgestaltung der Erfindung ergibt sich, wenn der Greifer 12 in Richtung der Schwerkraft arbeitet, d.h. wenn er zum Heben von Gegenständen verwendet wird. In diesem Fall wird durch die Schwerkraft der Stößel 9 mit der Magnetstange 2 in die Position gedrückt, bei der die Kugeln 6 aus dem Grundkörper 4 herausragen und einen Kugelkranz bilden. Dies hat zur Folge, daß in stromlosen Zustand der Spule 7 der Kugelkranz gebildet wird und somit eine Auflagefläche bzw. Auflageflächen oder Auflagepunkte für den Gegenstand vorhanden sind. Hierdurch ist ein vom Greifer 12 ergriffener Gegenstand auch dann gesichert, wenn während des Greifvorgangs die Stromzuführung zur Spule 7 unterbrochen wird.

Eine weitere vorteilhafte Ausgestaltung des Greifers 12 liegt darin, die Kugeln 6 durch Kegel, Prismen, Quader oder jede andere dreidimensionale Form zu realisieren. Dies hat den Vorteil, daß die Form der Auflageflächen am Greifer 12 der Form des Gegenstandes angepaßt wird, wodurch sich die Flächenpressung verringert.

Sollte eine kraftschlüssige Verbindung zwischen dem Greifer 12 und einem zu greifenden Gegenstand erforderlich sein, können die Kugel 6 auch durch spitze Prismen, Kegel oder Krallen ersetzt werden, die sich in den Innendurchmesser bzw. in die Innenfläche oder Innenflächen der Durchgangsöffnung des zu greifenden Gegenstandes bohren, so daß der Greifer 12 nicht mehr durch die Durchgangsöffnung komplett hindurchtauchen muß.

Besonders vorteilhaft hat sich der Greifer zum Einsatz in einem Compact-Disk-Transportsystem erwiesen. Der Greifer taucht in das Kernloch einer Compact-Disk ein, spreizt seinen Kugelkranz ab und nimmt die Compact-Disk formschlüssig auf. Hierdurch wird vermieden, daß die Compact-Disk durch eine Krafteinwirkung seitens des Greifers beschädigt wird.

Eine weitere vorteilhafte Ausgestaltung der Erfindung sieht vor, daß an das untere Ende des Grundkörpers 4 ein Sensor angebracht ist, der das Zentrieren des Greifers über der Durchgangsöffnung des zu greifenden Gegenstandes verbessert. Hierzu kann ein optischer Sensor eingesetzt werden der sich in vorteilhafter Weise zentriert am unteren Ende des Greifers befindet. Mittels dieses Sensors kann der Greifer zielgenau über die Mitte der Durchgangsöffnung des zu greifenden Gegenstandes geführt werden.

## Patentansprüche

1. Verfahren zum Greifen von Gegenständen mit einer Durchgangsöffnung, bei welchem ein Greifer (12) von einer ersten Seite durch die Durchgangsöffnung des zu greifenden Gegenstandes hindurchgeführt wird, bis der Greifer (12) auf der entgegenliegenden zweiten Seite der Durchgangsöffnung herausragt, der Umfang des Greifers (12) am aus der Durchgangsöffnung herausragendem Ende verbreitert wird, bis er größer als die Durchgangsöffnung des zu greifenden Gegenstandes ist, wodurch Auflageflächen und/oder Auflagepunkte am Greifer (12) auf der zweiten Seite geschaffen werden
**dadurch gekennzeichnet, daß**
der zu greifende Gegenstand von den Auflageflächen und/oder Auflagenpunkten des Greifer (12) formschlüssig aufgenommen wird.

2. Verfahren nach Anspruch 1,
**dadurch gekennzeichnet, daß**
bei vertikaler Stellung des Greifers (12) und im stromlosen Zustand einer Spule (7), ein Stößel (9) zusammen mit einer Magnetstange (2) durch die einwirkende Schwerkraft im Hohlraum eines Grundkörpers (4) nach unten gezogen wird und Mittel (6) in Bohrungen (5) durch die Formgebung des Stößels (9) aus dem Grundkörper (4) definiert hinausgedrückt werden, wodurch die Mittel (6) Auflageflächen und/oder Auflagepunkte um den Grundkörper (4) bilden, wodurch bei Stromausfall ein bereits angehobener Gegenstand fixiert bleibt, da in stromlosen Zustand der Spule (7) die Mittel (6), welche Auflageflächen und/oder Auflagepunkte bilden, weiterhin aus dem Grundkörper (4) hinausgedrückt werden.

3. Verfahren nach Anspruch 1 oder 2
**dadurch gekennzeichnet,daß**
im definierten stromdurchflossenen Zustand der Spule (7) die Magnetstange (2) zusammen mit dem Stößel (9) angehoben wird und die Mittel (6), die von dem Stößel (9) angezogen werden, dadurch in das Innere der Bohrungen (5) gezogen werden und die Auflageflächen und/oder Auflagepunkte zurückgebildet werden, wodurch ein formschlüssig gegriffener Gegenstand freigegeben wird.

4. Vorrichtung zum Greifen von Gegenständen mit einer Durchgangsöffnung, ein Grundkörper (4) vorgesehen ist, welcher im wesentlichen die Form eines Hohlzylinders aufweist der Grundkörper (4) mehrere radiale Bohrungen (5) aufweist, welche den gleichen Abstand von einer oberen Seite des Grundkörpers (4) aufweisen und auf dem Grundkörper (4) zueinander gleiche Abstände haben, in den Bohrungen (5) Mittel (6) zum verbreitern des Umfanges des Grundkörpers (4) vorgesehen sind und im Innern des Grundkörpers (4) Mittel (2, 7, 9) angeordnet sind, durch welche die Mittel (6) zum Verbreitern des Umfanges des Greifers (12) in radialer Richtung zur Symmetrieachse des Grundkörpers (4) bewegt werden,
**dadurch gekennzeichnet, daß**
der Greifer (12) aus dem hohlzylindrischen Grundkörper (4) besteht, der im oberen Bereich eine Verbreiterung (13), im untere Bereich eine konusartige Form (3) aufweist und sich der Hohlraum des Grundkörpers (4) nach unten verjüngt.

5. Vorrichtung nach Anspruch 4,
**dadurch gekennzeichnet, daß**
in die Bohrungen (5) jeweils Mittel (6) eingebracht sind, deren Durchmesser den Durchmessern der Bohrungen (5) entsprechen, so daß die Mittel (6) beweglich sind.

6. Vorrichtung nach Anspruch 4,
**dadurch gekennzeichnet, daß**
die konusartige Form (3) durch eine Gerade mit vorgegebener Steigung, durch eine parabolische Funktion oder jede andere geeignete mathematische Funktion definiert ist.

7. Vorrichtung nach einem der Ansprüche 4 bis 6,
**dadurch gekennzeichnet, daß**
das Material des Grundkörpers (4) aus einem nicht magnetischen und nicht magetisierbaren Material besteht.

8. Vorrichtung nach einem der Ansprüche 4 bis 7,
**dadurch gekennzeichnet, daß**
die Mittel (2, 7, 9) im Innern des Grundkörpers (4) eine Magnetstange (2), eine Spule (7) und einen Stößel (9) aufweisen.

9. Vorrichtung nach einem der Ansprüche 4 bis 8,
**dadurch gekennzeichnet, daß**
der Stößel (9) eine hohlzylindrische Form und im unteren Bereich eine Verjüngung (10) aufweist, daß der Stößel (9) mit der Magnetstange (2) verbunden ist und daß die Magnetstange (2) mit dem anderen Ende in den Spulenkörper (7) hineinreicht.

10. Vorrichtung nach einem der Ansprüche 4 bis 9,
**dadurch gekennzeichnet, daß**
die Mittel (6) zum fomschlüssigen Greifen aus Kugeln, Bolzen, Kegeln oder ähnlichen dreidimensionalen Körpern bestehen, die aus dem Innern des Grundkörpers (4) ausfahrbar sind.

11. Vorrichtung nach einem der Ansprüche 4 bis 10,
**dadurch gekennzeichnet, daß**
der Grundkörper (4) am oberen oder unteren Rand der Bohrungen (5) eine Nut (11) aufweist, in welche eine Sprengfeder (1) eingefügt ist, und die Sprengfeder (1) die Bohrungen (5) oben oder unter teilweise verschließt, wodurch die Mittel (6), die sich in den Bohrungen (5) befinden, nicht aus den Bohrungen (5) herausfallen können.

12. Vorrichtung nach einem der Ansprüche 4 bis 11,
**dadurch gekennzeichnet, daß**
unterhalb der Verbreiterung (13) Dämpfungspolster (8) angeordnet sind, wodurch eine Beschädigung der Oberfläche des zu greifenden Gegenstandes durch den Greifer (12) vermeiden wird.

13. Vorrichtung nach einem der Ansprüche 4 bis 12,
**dadurch gekennzeichnet, daß**
der Stößel (9) aus magnetischem Material hergestellt ist, wodurch die Mittel (6) durch die magnetische Eigenschaft des Stößels (9) von diesem stets angezogen werden, daher mit dem Stößel (9) stets Kontakt haben und nicht aus den Bohrungen (5) herausfallen können.

14. Vorrichtung nach einem der Ansprüche 4 bis 13,
**dadurch gekennzeichnet, daß**
die Dämpfungspolster (8) in Form von Mosgummiringen realisiert sind.

15. Vorrichtung nach einem der Ansprüche 4 bis 14,
**dadurch gekennzeichnet, daß**
der Grundkörper (4) mindestens drei Bohrungen (5) aufweist, die in jeweils gleichem Abstand zueinander und in gleichem Abstand von einer Seite des Grundkörpers (4) in diesen eingebracht sind.

16. Vorrichtung nach einem der Ansprüche 4 bis 10 oder 12 bis 15,
**dadurch gekennzeichnet, daß**
die Bohrungen (5) sich zum äußeren Rand des Grundkörpers (4) verjüngen, wodurch die Mittel (6) in den Bohrungen (5) den Grundkörper (4) nicht verlassen können.

17. Vorrichtung nach einem der Ansprüche 4 bis 16,
**dadurch gekennzeichnet, daß**
die Vorrichtung in einer Anordnung zur Archivierung und wahlweisen Aufnahme und/oder Wiedergabe von Compact-Disks angeordnet ist.

## Claims

1. Method for gripping objects having a throughhole, in which a gripper (12) is passed from one side through the throughhole of the object to be gripped until the gripper (12) protrudes on the oppositely situated, second side of the throughhole and the circumference of the gripper (12) is widened at the end protruding from the throughhole until it is greater than the throughhole of the object to be gripped, as a result of which support surfaces and/or support points are provided on the gripper (12) on the second side, characterized in that the object to be gripped is picked up in a shape-locked manner by the support surfaces and/or support points of the gripper (12).

2. Method according to Claim 1, characterized in that, with vertical positioning of the gripper (12) and in the de-energized state of a coil (7), a plunger (9) is pulled downwards together with a magnetic rod (2) by the action of gravity in the cavity of a main body (4) and means (6) in bores (5) are pushed in a defined manner out of the main body (4) by the shape of the plunger (9), as a result of which the means (6) form support surfaces and/or support points around the main body (4), as a result of which, in the absence of current, an object already lifted remains fixed since, in the de-energized state of the coil (7), the means (6) which form the support surfaces and/or support points continue to be pressed out of the main body (4).

3. Method according to Claim 1 or 2, characterized in that, in the defined current-carrying state of the coil (7), the magnetic rod (2) is raised together with the plunger (9) and the means (6), which are attracted by the plunger (9) are thereby pulled into the interior of the bores (5) and the support surfaces and/or support points are retracted, as a result of which an object gripped in a shape-locked manner is released.

4. Device for gripping objects having a throughhole, in which a main body (4) is provided which has essentially the form of a hollow cylinder, the main body (4) has a plurality of radial bores (5) which are at the same distance from an upper side of the main body (4) and are at equal distances from one another on the main body (4), means (6) are provided in the bores (5) for widening the circumference of the main body (4) and means (2, 7, 9) which move the means (6) for widening the circumference of the gripper (12) in the radial direction with respect to the axis of symmetry of the main body (4) are disposed in the interior of the main body (4), characterized in that the gripper (12) comprises the hollow cylindrical main body (4) which has a wider section (13) in the upper region and a conical shape (3) in the lower region and the cavity of the main body (4) tapers downward.

5. Device according to Claim 4, characterized in that means (6) whose diameter corresponds to the diameters of the bores (5) have been introduced into each of the bores (5) so that the means (6) are movable.

6. Device according to Claim 4, characterized in that the conical shape (3) is defined by a straight line with a specified slope, by a parabolic function or any other suitable mathematical function.

7. Device according to one of Claims 4 to 6, characterized in that the material of the main body (4) is composed of a non-magnetic and non-magnetizable material.

8. Device according to one of Claims 4 to 7, characterized in that the means (2, 7, 9) in the interior of the main body (4) comprise a magnetic rod (2), a coil (7) and a plunger (9).

9. Device according to one of Claims 4 to 8, characterized in that the plunger (9) has a hollow cylindrical shape and a taper (10) in the lower region, in that the plunger (9) is joined to the magnetic rod (2) and the other end of the magnetic rod (2) extends into the coil body (7).

10. Device according to one of Claims 4 to 9, characterized in that the means (6) for shape-locked gripping comprise bores, bolts, cones or similar three-dimensional bodies which can be extended from the interior of the main body (4).

11. Device according to one of Claims 4 to 10, characterized in that the main body (4) has, at the upper or lower periphery of the bores (5), a groove (11) into which a snap ring (1) is inserted and the snap ring (1) partially closes the bores (5) at the top or bottom, as a result of which the means (6) which are situated in the bores (5) cannot fall out of the bores (5).

12. Device according to one of Claims 4 to 11, characterized in that there are disposed underneath the wider section (13) damping pads (8) which prevent damage to the surface of the object to be gripped by the gripper (12).

13. Device according to one of Claims 4 to 12, characterized in that the plunger (9) is made of magnetic material, as a result of which the means (6) are always attracted by the plunger (9) as a result of its magnetic property and they therefore always make contact with the plunger (9) and cannot fall out of the bores (5).

14. Device according to one of Claims 4 to 13, characterized in that the damping pads (8) are embodied in the form of foam-rubber rings.

15. Device according to one of Claims 4 to 14, characterized in that the main body (4) has at least three bores (5) which have each been introduced into the main body (4) at an equal distance from one another and at an equal distance from one side of the main body (4).

16. Device according to one of Claims 4 to 10 or 12 to 15, characterized in that the bores (5) taper towards the outer periphery of the main body (4), as a result of which the means (6) in the bores (5) cannot leave the main body (4).

17. Device according to one of Claims 4 to 16, characterized in that the device is disposed in a system for archiving and optionally recording and/or playing back compact discs.

## Revendications

1. Procédé de préhension d'objets pourvus d'une ouverture traversante, dans lequel un moyen de préhension (12) est introduit depuis un premier côté à travers l'ouverture traversante de l'objet à saisir jusqu'à ce que le moyen de préhension (12) fasse saillie sur le côté opposé de l'ouverture traversante, la circonférence du moyen de préhension (12) est élargie à l'extrémité faisant saillie hors de l'ouverture traversante jusqu'à ce qu'elle soit supérieure à l'ouverture traversante de l'objet à saisir, grâce à quoi des surfaces et/ou des points d'appui sont créés sur le deuxième côté du moyen de préhension (12), caractérisé en ce que l'objet à saisir est reçu par coopération de formes par les surfaces et/ou les points d'appui du moyen de préhension (12).

2. Procédé selon la revendication 1, caractérisé en ce qu'en position verticale du moyen de préhension (12) et à l'état sans courant d'une bobine (7), un poussoir (9) est tiré vers le bas conjointement avec une tige magnétique (2) par la pesanteur agissant dans la cavité d'un corps de base (4), et des moyens (6) dans des perçages (5), définis par la forme du poussoir (9), sont pressés hors du corps de base (4), grâce à quoi les moyens (6) forment des surfaces et/ou des points d'appui autour du corps de base (4), grâce à quoi en cas de panne de courant, un objet déjà soulevé reste fixé puisque, à l'état sans courant de la bobine (7), les moyens (6) qui forment des surfaces et/ou des points d'appui continuent à être pressés hors du corps de base (4).

3. Procédé selon l'une ou l'autre des revendications 1 et 2, caractérisé en ce qu'à l'état défini parcouru par le courant de la bobine (7), la tige magnétique (2) est soulevée conjointement avec le poussoir (9) et les moyens (6) qui sont attirés par le poussoir (9), sont pour cette raison tirés jusque dans l'intérieur des perçages (5), et les surfaces et/ou les points d'appui se rétractent, grâce à quoi un objet saisi par coopération de formes est libéré.

4. Dispositif de préhension d'objets comportant une ouverture traversante, dans lequel est prévu un corps de base (4) qui présente sensiblement la forme d'un cylindre creux, le corps de base (4) présentant plusieurs perçages (5) radiaux qui présentent la même distance par rapport à une face supérieure du corps de base (4) et qui, sur le corps de base (4), ont les même distances les uns par rapport aux autres, des moyens (6) d'élargissement de la circonférence du corps de base (4) étant prévus dans les perçages (5) et à l'intérieur du corps de base (4) étant agencés des moyens (2, 7, 9) qui permettent de déplacer en direction radiale par rapport à l'axe de symétrie du corps de base (4) les moyens (6) d'élargissement de la circonférence du moyen de préhension (12), caractérisé en ce que le moyen de préhension (12) est constitué par le corps de base (4) cylindrique creux qui présente dans la région supérieure un élargissement (13) et dans la région inférieure une forme conique (3) et en ce que la cavité du corps de base (4) se rétrécit vers le bas.

5. Dispositif selon la revendication 4, caractérisé en ce que dans les perçages sont montés des moyens (6) respectifs dont les diamètres correspondent aux diamètres des perçages (5) de sorte que les moyens (6) sont mobiles.

6. Dispositif selon la revendication 4, caractérisé en ce que la forme conique (3) est définie par une droite avec pente prédéterminée, par une fonction parabolique ou par toute autre fonction mathématique appropriée.

7. Dispositif selon l'une quelconque des revendications 4 à 6, caractérisé en ce que le matériau du corps de base (4) est en un matériau non magnétique et non magnétisable.

8. Dispositif selon l'une quelconque des revendications 4 à 7, caractérisé en ce que les moyens (2, 7, 9) à l'intérieur du corps de base (4) présentent une tige magnétique (2), une bobine (7) et un poussoir (9).

9. Dispositif selon l'une quelconque des revendications 4 à 8, caractérisé en ce que le poussoir (9) présente une forme cylindrique creuse et, dans la région inférieure, un rétrécissement (10), en ce que le poussoir (9) est relié à la tige magnétique (2) et en ce que la tige magnétique (2) parvient avec l'autre extrémité jusque dans le corps de bobine (7).

10. Dispositif selon l'une quelconque des revendications 4 à 9, caractérisé en ce que les moyens (6) de préhension par coopération de formes sont constitués par des billes, des goujons, des cônes ou des corps tridimensionnels similaires qui sont déployables depuis l'intérieur du corps de base (4).

11. Dispositif selon l'une quelconque des revendications 4 à 10. caractérisé en ce que le corps de base (4) présente sur les bords supérieur et inférieur des perçages (5) une gorge (11) dans laquelle est inséré un jonc et en ce que le jonc (1) ferme en haut ou en bas partiellement les perçages (5), grâce à quoi les moyens (6) qui se trouvent dans les perçages (5) ne peuvent pas tomber hors des perçages (5).

12. Dispositif selon l'une quelconque des revendications 4 à 11, caractérisé en ce qu'en dessous de l'élargissement (13) sont agencés des tampons d'amortissement (8) qui permettent d'éviter un endommagement de la surface de l'objet destiné à être saisi par le moyen de préhension (12).

13. Dispositif selon l'une quelconque des revendications 4 à 12, caractérisé en ce que le poussoir est réalisé en matériau magnétique grâce à quoi, par la propriété magnétique du poussoir (9), les moyens (6) toujours attirés par celui-ci sont par conséquent toujours en contact avec le poussoir (9) et ne peuvent pas tomber hors des perçages (5).

14. Dispositif selon l'une quelconque des revendications 4 à 13, caractérisé en ce que les tampons d'amortissement (8) sont réalisés sous forme de bagues en caoutchouc mousse.

15. Dispositif selon l'une quelconque des revendications 4 à 14, caractérisé en ce que le corps de base (4) présente au moins trois perçages (5) qui sont ménagés dans celui-ci, à même distance les uns par rapport aux autres et à même distance depuis un côté du corps de base (4).

16. Dispositif selon l'une quelconque des revendications 4 à 10 ou des revendications 12 à 15, caractérisé en ce que les perçages (5) se rétrécissent vers le bord extérieur du corps de base (4), grâce à quoi les moyens (6) situés dans les perçages (5) ne peuvent quitter le corps de base (4).

17. Dispositif selon l'une quelconque des revendications 4 à 16, caractérisé en ce que le dispositif est agencé dans un agencement destiné à l'archivage et au choix à la gravure et/ou à la lecture de disques compacts.
